Europäisches Patentamt

European Patent Office

Office européen des brevets

(19)

(11) EP 1 092 691 A1

(12) **EUROPEAN PATENT APPLICATION**

(43) Date of publication:
18.04.2001 Bulletin 2001/16

(51) Int Cl.[7]: **C04B 7/43**

(21) Application number: 99810827.8

(22) Date of filing: 16.09.1999

(84) Designated Contracting States:
**AT BE CH CY DE DK ES FI FR GB GR IE IT LI LU MC NL PT SE**
Designated Extension States:
**AL LT LV MK RO SI**

(71) Applicant: **"Patelhold" Patentverwertungs-& Elektro-Holding AG**
**8750 Glarus (CH)**

(72) Inventors:
• **Srinivasachar, Srivats**
  **Sturbridge, Massachusetts (US)**
• **Toqan, Majed**
  **78170, La Celle St. Cloud (FR)**

(74) Representative: **Klein, Ernest**
  **Sandstrasse 24**
  **5416 Kirchdorf AG (CH)**

(54) **Method of producing cement clinker from a cement raw mix and clean gas from coal**

(57) In a method of producing cement clinker from a cement raw mix and clean gas from a hydrocarbon, cement raw mix is preheated in a solids preheater, which cools the product gas exiting a gasifier (1). In the gasifier (1) hot air and steam is mixed with hydrocarbon forming CO and $H_2$. Solids consisting of ash being drained off the bed of the gasifier are added to the cement raw mix. Downstream the solids preheater (2) carbonaceous residue is filtered out of the reduced gas and fed to the calciner (5) and/or to the kiln (13) as a fuel.

EP 1 092 691 A1

## Description

Field of the invention

The invention relates to a method of producing cement clinker from a cement raw mix and clean gas from a hydrocarbon,

- comprising calcining the cement raw mix in a calciner, discharging the calcined raw mix in a rotary kiln and clinkering it therein, and subsequently cooling the clinker in a clinker cooler,
- further comprising mixing in a reaction zone hot air with hydrocarbon whereby carbon reacts with oxygen to form $CO_2$ and CO under heat release, the hydrocarbon releasing moisture and volatile, the volatile and carbon reacting to CO and $H_2$, at the exit of the reaction zone separating at least the predominant of the carbonaceous residue from the fluid and returning it to the reaction zone, and utilizing the product gas.

Discussion of Background

A method of producing cement clinker and a clean gas as described above in the "field of the invention" is known from the article "Neubau und erste Betriebsergebnissse der Ofenlinie 5 im Werk Rüdersdorf der Readymix Zement GmbH, by P.Kehl et al, published in a reprint from ZKG International, Cement-Lime-Gypsum, 50. volume (1997) N0.1 pp. 20-34. In this method the raw cement mix is mixed in the correct proportion, dried and then pulverized to the correct size in a vertical mill. It is then introduced at the top of a series of cyclones wherein it is preheated by flue gas in a predominantly countercurrent fashion and then directed to a calcination reactor. One of the required components for the raw mix is clay (aluminosilicates). In this method, ash from a nearby lignite-fired power plant, which also has carbon, is gasified in a separate fluidized bed gasifier. The bed drain from the fluidized bed is considered to be a useful product and is returned after cooling to the metering station of the cement raw mix without leaving any residue, while the lean gas produced in the reactor during substoichiometric combustion is forwarded as fuel to the calciner.

The production of fuel gas from hydrocarbon like coal is operated at the present time by injecting cold reactants and/or steam into a gasifier and transferring a major portion of the sensible heat in the gasification products to a water/steam mixture. This is necessary to enable reliable operation of downstream gas cleaning equipment. Consequently the conversion of coal to the product gas in terms of the energy content is not maximized. Also the efforts to date in gasification have been directed towards overcoming the slow conversion of char to syngas through its reaction with water and carbon dioxide. This process requires high temperature and long residence time.

Summary of the invention

Accordingly, the object of the invention is to provide a novel method and plant for integrating a cement clinker-manufacturing unit with a hydrocarbon, especially coal fired power plant, using circulating fluidized bed technology, for forming clean gas. The basic idea is to use only part of the coal energy in clean gas production respectively in power production. In this connection it is important to realize that up to 70% of the coal energy in a bituminous coal is easily extractable in form of volatile matter. The part which is stored in the form of unreactive char is harder to extract. In turn it is another object of the invention to use this part to provide the energy requirement for the cement forming process

Starting from the method as described in the "field of the invention" the objects are met, according to the invention, by following means:

- in the reaction zone converting the sulfur of the hydrocarbon into $H_2S$ and to a lesser extend COS, adding a sulfur sorbent being converted into CaO, which CaO reacts with $H_2S$ and COS to solid CaS,
- filtering ash and carbonaceous residue out of the reduced gas and feeding them to the calciner and/or to the kiln as a fuel,
- further comprising the gas and the fly ash escaping the cyclone of the calciner being passed through at least one heat exchanger and through a filter.

In a preferred embodiment of the invention, the gas at the exit of the gasifier reaction zone is fed into a solids preheater in which it is cooled preferably in countercurrent by the cement raw mix and solids, these solids consisting of ash being drained off the bed of the reaction zone. In a third embodiment of the invention, the air introduced into the reaction zone (gasifier) is preheated in at least one exchanger after the calciner and/or in the clinker cooler. Thus for the coproduction of clean gas and cement, solids and heat are exchanged between the two plants.

The advantages of the invention are numerous:

- In prior art gasification plants, there is need for high carbon conversion efficiency to get high fuel utilization efficiency and to avoid disposal of harmful products. Conversion rates greater than 97% are common. Now there is no need to achieve high carbon conversion efficiency in the gasifier line, because carbonaceous material from the gasifier line is used as fuel for calcination and/or for clinkering. In the calciner and/or the kiln a complete burnout is achieved. This step creates a first interconnection between clean gas and cement production.
- In traditional systems limestone consumption for sulfur capture is minimized. A Ca/S ratio of about 2 is usual to minimize sorbent and disposal of CaS. Now that sorbent and it's products can be used as raw material for the cement production, significantly higher amounts of sorbent like Ca/S >3 can be used, which improves the sulfur capture. This step of increasing the sorbent amount creates a second interconnection between clean gas and cement production.

- Disposal of CaS is an important issue. In traditional systems it has been tried to oxidize calcium sulfide to CaS04. This reaction does not proceed to completion unless high temperatures greater than 1000 °C are used. Now the CaS formed in the gasification system is completely oxidized in the kiln since reaction temperatures reach as high as 1400 °C. This step creates a third interconnection between clean gas and cement production.
- The new method produces nearly no residues.
- In prior art plants, the produced syngas is generally cooled by extracting heat into steam. Now the cement raw mix solids are used as material to cool down the syngas in a cyclone. This step creates a fourth interconnection between clean gas and cement production.
- In prior art plants, the air entering the gasifier is not significantly preheated. Now it might have a very high degree of preheat, when it passes the clinker cooler in which it obtains a temperature of between 800 and 1100 °C

Brief description of the invention

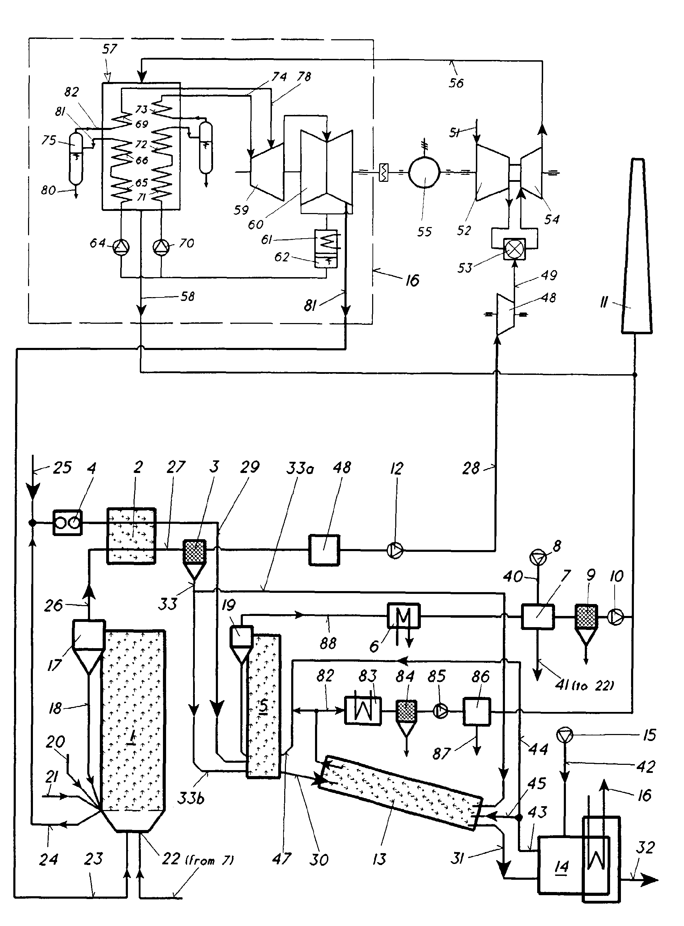

A more complete appreciation of the invention and many of the attendant advantages thereof will be readily obtained as the same becomes better understood by reference to the following detailed description when considered in connection with the accompanying drawing, which illustrates diagrammatically an exemplary embodiment of the invention with coal as hydrocarbon. Only the elements essential for understanding the invention are shown. Arrows illustrate the flow direction of the working media.

Description of the preferred embodiment

Referring now to the drawing, the equipment necessary for performing the gas production comprises mainly three blocks, namely a gasifying device 1, a gas/solid heat exchanger 2 and a filter 3. The equipment necessary for performing the cement production comprises mainly three blocks, namely the same gas/solid heat exchanger 2 acting as a solids preheater, a calciner 5, a kiln 13 and a clinker cooler 14.

- Regarding the preheating of the oxygen-containing gas, which preferably is air needed for cooling the cement clinker, for clinkering the cement raw mix, for calcining the raw cement mix and for gasification of the hydrocarbon, which is coal in this embodiment.

Via air intake line 40, ambient air is sucked in the system by a fan 8. This air is preheated in an air preheater 7, which might be of the Ljungstrom-type, and then supplied to the gasifier 1 via line 41. Via air intake line 42 another portion of ambient air is sucked in the clinker cooler 14 by a fan 15. Therein it is heated by cooling down the cement clinker. Via a common line 43 this air exit the clinker cooler. The air is now divided into two streams. A first stream is supplied to the kiln as combustion air. A second stream bypasses the kiln via line 44 and is added to the hot gases leaving the kiln. This gas/air mixture is then fed as combustion mixture to the calciner 5 via a line 47.

- Regarding the "reduced" clean gas production

The air enters a reactor 1 via a hot air supply 22. Depending on the apparatus type, the mixture can be introduced into the reactor on different levels. In the example shown on the drawing, in which the reactor is an upright gasifier with a flow stream from bottom to top, the air is introduced at the bottom. The reactor, which may be a circulating fluidized bed gasifier, is provided with three other inlets. One carbonaceous residue supply line 18, one steam supply line 23, one inlet 21 for the coal and one inlet 20 for the sulfur sorbent. Coal and sorbent could of cause be introduced by a common line.

In the present example the carbonaceous residue is char which is partially gasified coal. It reacts with the oxygen of the air/steam mixture to form $CO_2/CO$ and releases heat.

Downstream of the char inlet, the coal to be gasified is introduced into the reactor. This coal can be either crushed or pulverized. Like the air, coal may be injected on different levels of the reactor. Sulfur sorbent, which can be pulverized limestone or dolomite, is also introduced. Coal and sorbent may be transported by any suitable means, i.e. by steam; in a preferred embodiment, the produced reduced gas itself transports the solids. If the coal is in form of crushed material with a size of approximately 6-mm, it can be fed by gravity. The adding of coal in the reactor results in a moisture and volatile release. A reaction of volatile and carbon occurs with the steam, the $CO_2$ and remaining $O_2$ (if any) to form CO and $H_2$.

Thus at the exit of the reactor 1 there is mainly CO and $H_2$ to be found together with $N_2$ from the air and trace amounts of $CO_2$ and $H_2O$ in vapor form. Also present are char and ash.

If limestone is used as a sulfur sorbent in the reactor, $CaCO_3$ is converted into CaO. The sulfur in the coal is converted mainly into $H_2S$ and in trace quantities into COS. Most of the $H_2S$ and COS react with CaO to form solid CaS. Thus at the exit of the reactor, the calcium sorbent is present as CaS and CaO. In another embodiment, a small fraction of hot CaO exiting the calciner via line 30 may be also be used as sulfur sorbent.

Downstream the reactor a particulate separation device 17 is provided. This separator could be a cyclone designed to separate the predominant char from the remaining components. Since the size of the ash is typically smaller than $30\mu m$ it will escape the cyclone, while the char, which is greater than $100\mu m$, will be retained in the cyclone. This separated char is returned via the supply line 18 into the reactor, while the remaining components, especially the reduced gas is forwarded to a gas cooler 2.

Downstream the gas cooler a solids filter 3 is provided in the line 27 to remove from the gas fine ash and char as well as CaS and CaO, not been separated in the gasifier cyclone 17 or gas cooler 2. This filter is supposed to remove all the remaining solids from the gas. The separated solids leave the filter via line 33.

A further fan 12 is installed in the gas line exiting the filter, preferably on the clean side of the filter 3. Its purpose is to control the pressure in the system close to atmospheric conditions.

Depending on the utilization of the gas, a further gas cooler may be provided in the gas line downstream the fan 12, if a wet electrostatic precipitator has not been used upstream as a filtering element 3. To cool the gas down to $30°C$, which is preferred if further compression is required, it is recommended to use a water spray cooler.

The filter 3 could be a bag filter, an electrostatic precipitator or a wet electrostatic precipitator. The use of the latter provides following advantages: beside the particulate removal a further cooling of the gas, the removal of ammonia, tar and hydrogen cyanide that might have been produced in the reactor 1. As shown in the drawing, in the clean gas line 28 leading to a compressor for further use, a scrubber 48 is installed. Its purpose is to remove ammonia:

The scrubber reaction products are supplied either to the calciner, to the kiln or to the kiln flue gas discharge. Eventually they are converted to molecular nitrogen.

$$NH_3 + NO \rightarrow N_2 + H_2O$$

$$NH_3 + O_2 \rightarrow NO + H_2O$$

The scrubber discharge may also be treated separately by wet methods for disposal.

- Regarding the cement production

    The further treatment of the solids removed from the filter 3 is a major feature of the present invention. Another major feature is the integrated coproduction of clean gas and cement, in which coproduction the ashes of the gasifier are used to replace part of the cement raw mix in the cement production. Indeed coal ashes are similar in composition as calcined clays. Moreover all of the coal residues are converted into cement; the sulfur is absorbed by clinker component CaO.

The cement raw mix is introduced in the system via line 25. Hot solids that predominantly comprise ash, CaS, CaO and carbon drained of the fluidizing bed via line 24 may be cooled down before adding them to the cement raw mix. The raw mix in its final composition is supplied to a grinder 4 in which it is pulverized. The ground material is then forwarded through a gas cooler 2. This gas cooler 2 is a gas/solids heat exchanger and might be constituted of a series of cyclones. Therein solids and gas flow in countercurrent. The preheated mix is then supplied to a calciner 5. Any materials in the cement raw mix which can release gaseous sulfur species at gas cooler (2) temperatures are introduced directly into the gasifier 1 to allow capture of the released sulfur species by CaO into CaS.

Via line 33a part of the solids separated in filter 3 and comprising predominantly ash, char, CaS and CaO are supplied to the calciner as fuel. The gas cooler 2 is operated such that the solids temperature does not exceed around $800°C$ to prevent any significant limestone calcination.

In the calciner reactor 5, the following reactions take place in the presence of the oxygen of the hot gas/air mix supplied via line 47:

- carbonaceous residue is oxidized to $CO_2$ under heat release;
- limestone $CaCO_3$ reacts to solid calcium oxide CaO and to gaseous $CO_2$ under heat consumption,
- Sulfur S and oxygen $O_2$ react to gaseous $SO_2$,
- calcium sulfide CaS and $2O_2$ react to solid calcium sulfate $CaSO_4$ and calcium oxide CaO,
- calcium oxide CaO combines with $SO_2$ released from coal combustion and $\frac{1}{2}O_2$ to form solid gypsum $CaSO_4$ (or to $CaSO_3$ depending on the temperature).

Additional fresh fuel may be supplied to the calciner 5, if inadequate carbon is present in the residue from the filter 3 or if ignition or flame stabilization is necessary.

The composition of calcined raw mix is then supplied via line 30 to a rotary kiln 13, in which it is burnt into cement clinker. For combustion a small amount of material separated in filter 3 and fed via line 33a is injected via a lance into the kiln together with the preheated air in line 45. Additional fresh fuel may be supplied to the rotary kiln 13, if inadequate carbon is present in the residue from the filter 3 or if ignition or flame stabilization is necessary. It is understood that the additional amount of fuel flow and the total air flow are controlled based on the carbon content and amount in the solids discharge from the gas cooler 2 and the filter 3.

The cement clinker - in form of nodules - is then forwarded via line 31 into a clinker cooler 14, which might be a moving grate. Besides air preheating, in the present example is also shown steam production in the cement cooler. This steam may be injected in an appropriate location in the steam turbine island 16. The cooled clinker nodules are finally supplied via line 32 to a cement grinder, which is not shown.

It is understood that if the clinker cooler 14 is operated very close to ambient pressure, there is need to use a high temperature air heater, preferably of the Ljungstrom type, where the hot air from the clinker cooler 14 and the flue gases after the calciner 5 are heat exchanged with pressurized air (from a fan), thus producing hot pressurized air.

In traditional systems, limestone consumption for sulfur capture is minimized, as it is an operating expense. A Ca/S molar ratio of about 2 is usual to minimize sorbent use and disposal of the CaS product. Now that the sorbent and its products are used as raw material for the cement clinker production, significantly higher amounts of sorbent, like molar ratio of Ca/S greater than 3 can be used. This removes any constraints with respect to sulfur capture.

A very high sulfur removal efficiency (greater than 98%) in the flue gases leaving the calciner cyclone 19 is expected because of the high Ca/S loading and the appropriate temperature for $SO_2$ capture by lime in the calciner 5. $SO_2$ capture can be additionally addressed by reinjecting a portion of the lime-rich solids collected in the filter 9 into the flue gas duct 88 leading to the filter 9 and by simultaneously controlling the relative humidity in the flue gas by moisture addition or temperature control and/or using other enhancements such as hydrating the calcined lime. This might be necessary for high-sulfur fuels, where the portion of the sulfur in the cement raw mix released in kiln 13 and not captured in calciner 5 by CaO and carried back to filter 9 is above any regulatory emission limits.

The flue gas and the fly ash exit the gas outlet of the separation device 19 via line 88. These separated gases are further treated before disposal. They are first cooled down in a gas cooler 6, thereby heating up water in an economizer integrated in the water/steam cycle of a steam turbine island 16. Downstream the gases are further cooled in the air preheater 7. The gas is supposed to leave this gas cooler 7 with a temperature of about 100-150°C. Downstream the gas cooler a solids filter 9 is provided in line 88 to remove from the gas all the remaining solids. This filter 9 could be a fabric filter or an electrostatic precipitator. A fan 10 is installed in the gas line exiting the filter, preferably on the clean side of the filter 9. The cleaned gas leaves the system via the stack 11.

The solids separated in the filter 9 are fed to an appropriate location in the cement system.

• Regarding power generation

The produced clean gas is suitable for direct combustion in conventional gas turbines. As steam is also required for the gasification process, one application of the invention is described in connection with a combined cycle power plant. This plant is shown in a simple form being restricted to the thermodynamically necessary elements of the water/steam cyclic process.

Referring to the drawing, in the gas turbine system, fresh air sucked in via a line 51 is compressed to the working pressure in a compressor 52. The compressed air is highly heated in a combustion chamber 53 fired with the medium BTU gas produced in the gasifier 1. This fuel gas is compressed to the working pressure in a gas compressor 49 and is fed into the combustion chamber via a fuel line 50. The heated gas thus obtained is expanded in a gas turbine 54 to perform work. The energy thereby gained is transferred to a generator 55 or the compressor 52. The still hot exhaust gas from the gas turbine is supplied from the exit of the gas turbine, via a line 56, to a heat recovery steam generator 57 and, after having transferred its heat to the water/steam cyclic, is led via line 58 and stack 22.

In the water/steam circuit, a multiple casing steam turbine 59, 60 is arranged on the same shaft as the gas turbine. The working steam expanded in the low-pressure turbine 60 condenses in a condenser 61. The condensate is conveyed from the hot well 62 by means of a pump 64, 70 directly into the steam generator 57.

The heat recovery steam generator plant 57 is designed as a vertical boiler and, in the present case, works according to a dual pressure steam process. Of course, the number of pressure stages in the example is of no importance.

The low-pressure system is designed as a once through system. It consists, in the flue gas path of the boiler, of a low-pressure economizer 65, into which the condensate is introduced via a feed pump 64, of a low-pressure evaporator 66 and of a low-pressure superheater 69. The superheated steam is carried over into a suitable stage of the medium pressure steam turbine 60 via a low-pressure steam line 78. The high-pressure system is designed as a once through system and can therefore be designed both for subcritical and for supercritical parameters. It consists, in the flue gas path of the boiler, essentially of the high-pressure economizer 71, of the high-pressure evaporator 72 and of the high-pressure superheater 73. The working medium is supplied to the high-pressure economizer 71 via a high-pressure feed pump 70. The superheated steam is carried over into the high-pressure part 59 of the steam turbine via a live steam line 74. For phase separation, a separating bottle 75 is provided in each of the two systems, the outlet of the evaporators 66, 72 opening into said separating bottle. The separating bottle is connected, at its upper end, to the superheater 69, 73. At their lower end, the bottles are each provided with a blowdown line 80, via which the impurities are drawn off.

The steam for the gasification process can be withdrawn from any appropriate place of the plant. In the present example it is taken from a bleed 81 of the low-pressure turbine 60.

When using high sulfur fuels, a portion of the sulfur captured in the system would be released in the kiln 16 due to the high processing temperatures. It might also be necessary to control the sulfur content of the clinker to below a certain value (typically 2.5 to 3% $SO_3$) to obtain acceptable clinker quality. An acceptable sulfur content in the clinker can be achieved, for example, by controlling the level of oxidizing conditions in the kiln, with the $SO_2$ being released into the flue gas leaving the kiln. The flue gas stream exiting the kiln 13, relatively concentrated in $SO_2$, can be cost-effectively treated by taking a portion of it and cleaning it in a wet limestone scrubber to a valuable product gypsum, which can be added to the final cement product.

A bypass flue gas line 82 is connected to a flue gas cooler 83 and a filter 84. This filter could be an electrostatic precipitator wherein the entrained particles are separated, the coarse particles being returned to the process and the fine particles being separately disposed. The electrostatic precipitator is followed downstream by a fan 85 and a limestone scrubber 86. The gas exit of the scrubber is connected to stack 11. Gypsum $CaSO_4$ is formed in the limestone scrubber by combining $CaCO_3$ with $SO_2$ and oxygen. This gypsum can be used as an additive to ground clinker in the final cement product. It is discharged from the scrubber by line 87.

The invention may be illustrated in more detail with reference to a numerical example: it goes without saying that all absolute values cannot be specified with regard to the involved apparatus and their the dimensioning, since absolute values are in any case not meaningful enough on account of their dependence on numerous parameters.

For obtaining a clean gas output of 60 kg/sec and a cement output of 70 kg/sec, a total airflow of 132 kg/sec, coal in the amount of 27 kg/sec, limestone and additives in the amount of 105 kg/sec are needed. Typical syngas composition would be 30% CO, 28% $H_2$, 2% $CO_2$, 2% $H_2O$, and 38% $N_2$.

The airflow:

110 kg/sec of ambient air are sucked in by fan 8 to the air preheater 7 and is preheated therein to 300 °C. 22 kg/sec of ambient air are sucked in by fan 15 in the clinker cooler 14. 68 kg/s of the heated air from the air heater is mixed with this air before the clinker cooler. The heated air from the clinker cooler is withdrawn from the clinker cooler at 900°C. 25 kg/sec are fed into the kiln via line 45 and 65 kg/sec are bypassing the kiln via line 44. The gas amount out of the kiln is about 28 kg/sec at 1100°C.

The clean gas production:

The steam amount supplied to the fluidized bed is 5 kg/sec. The limestone amount supplied to the fluidized bed is 6.3 kg/sec. Coal in the amount of 27 kg/sec is injected. In the reactor 300 - 900 kg/sec are typically circulated. The gas and the solids exiting the reactor 1 and entering the cyclone 17 have a temperature between 800 and 1100 °C. Downstream the reactor's cyclone 17, the escaped product gas is in the amount of 60 kg/sec and the escaped fly ash is in the amount of 8.5 kg/sec. In the example shown, the gas and the fly ash are cooled down in the multicyclones of the solids preheater 2 to 150 °C.

The cement production:

- Limestone and additives in the amount of 100 kg/sec are introduced in the system. The bed drain of the reactor 1 is at about 6 kg/sec and contains about 3 kg/s combustible material. Some material is also added from the filter 9. Thus 109 kg/sec of raw mix are supplied to the solids preheater 2, heated therein to 600°C and forwarded as preheated mix to the calciner. The combustible material out of reactor 1 and separated in filter 3 is in the amount of 4.2 kg/sec. Separated material with combustibles in the amount of 2.2 kg/sec is injected into the kiln as a fuel; an amount with combustible portion of 2 kg/s is injected into the calciner as fuel. Additional combustible material in the bed drain that combines with the limestone and additives in the amount of 3 kg/sec also enters the calciner as a fuel.

- Downstream the calciner's cyclone 19, the escaped flue gas is in the amount of 135 kg/sec. The escaped fly ash, that comprises predominantly CaO and other components of the cement raw mix, is in the amount of 3 kg/sec. In the example shown, the gas and the fly ash are cooled down in the steam heat exchanger 6 to 400°C and further in the air cooler 7 to around 120 °C. They are finally passed through a filter 9, in which the remaining solids are separated. These solids are returned to the cement raw mix.

- The flue gas in line 82 is in the amount of 1.0 kg/s at 1100°C. The temperature after the cooler 83 is 150°C.

- At the solids exit of the calciner, the material has a temperature of 800°C. In the kiln the clinkering takes place at a temperature of 1400°C. The hot clinker in form of nodules is cooled down to 150 °C before grinding.

Of course, the invention is not restricted to the plant shown and described. The invention can be used irrespective of the type and design of the gasifier. This gasifier could be as well an apparatus with entrained flow, if a pulverized fuel is used. Instead of cyclones, separating apparatus with moving bed could be used as well. The discharged hot bed material might be ground prior mixing to its adding to the cement raw mix. Instead of limestone being supplied to the gasifier as sulfur sorbent, hot lime extracted from the line 30 leading from the calciner 5 to the kiln 13 could be used as well. It might be that there is a pressure mismatch between the pressure at the exit of the clinker cooler and the pressure needed for the gasifier inlet. This could be overcome in either operating the clinker cooler at much higher pressures or by heat exchanging the hot clinker cooler exit gases with pressurized air in a further air heater.

Obviously, numerous modifications and variations of the present invention are possible in light of the above teachings. It is therefore to be understood that, within the scope of the appended claims, the invention may be practiced otherwise than as specifically described herein.

List of Designations

| 1 | reaction zone, gasifier |
|---|---|
| 2 | solids preheater, multicyclones |
| 3 | filter, electrostatic precipitator or bag filter |
| 4 | grinder |
| 5 | calciner |
| 6 | heat exchanger, steam producer |
| 7 | heat exchanger, air preheater |
| 8 | fan |
| 9 | filter, electrostatic precipitator |
| 10 | fan |
| 11 | stack |
| 12 | fan |
| 13 | kiln |
| 14 | clinker cooler |
| 15 | fan |
| 16 | steam turbine island |
| 17 | cyclone of 1 |
| 18 | solids return line |
| 19 | cyclone of 5 |
| 20 | limestone supply |
| 21 | hydrocarbon supply, coal |
| 22 | air supply |
| 23 | steam supply |
| 24 | bed drain |
| 25 | cement raw mix supply |
| 26 | gas and fly ash out of reaction zone |
| 27 | gas and fly ash out of solids preheater |
| 28 | clean gas line to compressor |
| 29 | solids line from preheater 2 to calciner 5 |
| 30 | solids line from calciner 5 to kiln 13 |
| 31 | cement clinker line from kiln 13 to clinker cooler 14 |
| 32 | cement clinker line from clinker cooler 14 to clinker grinder |
| 33 | filter drain off line |
| 33a | filter drain off line to calciner |
| 33b | filter drain off line to kiln |
| 40 | air intake line |
| 41 | preheated air from air preheater 7 to gasifier 1 |
| 42 | air intake line |
| 43 | air line out of clinker cooler 14 |
| 44 | air line bypassing kiln |
| 45 | air line into kiln |
| 46 | air line to gasifier 1 |
| 47 | combustion air line to calciner 5 |
| 48 | scrubber |
| 49 | gas compressor |
| 50 | fuel line |
| 51 | Line (sucked in fresh air) |
| 52 | Compressor |
| 53 | Combustion chamber |
| 54 | Gas turbine |
| 55 | Generator |
| 56 | Line (exhaust gas) |
| 57 | heat recovery steam generator plant |
| 58 | Line (to stack) |
| 59 | High-pressure turbine |
| 60 | Low-pressure turbine |
| 61 | Condenser |
| 62 | Hot well |
| 64 | Feedwater pump |
| 65 | Low-pressure economizer |
| 66 | Low-pressure evaporator |
| 69 | Low-pressure superheater |
| 70 | Feedwater pump |
| 71 | High-pressure economizer |
| 72 | High-pressure evaporator |
| 73 | High-pressure superheater |
| 74 | Live steam line |
| 75 | Cleaning separating bottle |
| 78 | Low-pressure steam line |
| 80 | Blowdown line |
| 81 | Bleed at 60 |
| 82 | bypass flue gas from kiln 13 |
| 83 | flue gas cooler |
| 84 | filter |
| 85 | fan |
| 86 | limestone scrubber |
| 87 | scrubber discharge |
| 88 | flue gas line from 19 |

**Claims**

1. In a method of producing cement clinker from a cement raw mix and clean gas from a hydrocarbon,

   - comprising calcining the preheated cement raw mix in a calciner (5), discharging the calcined raw mix in a rotary kiln (13) and clinkering it therein, and subsequently cooling the clinker in a clinker cooler (14),

- further comprising mixing in a reaction zone (1) hot oxygen-containing gas and steam with hydrocarbon whereby carbon reacts with oxygen to form $CO_2$ and CO under heat release, the hydrocarbon releasing moisture and volatile, the volatile and carbon reacting to CO and $H_2$, the sulfur of the hydrocarbon being mainly converted into $H_2S$ and to a lesser extend COS, adding a sulfur sorbent being converted into CaO, which CaO reacts with $H_2S$ and COS to solid CaS, at the exit of the reaction zone separating at least the predominant of the carbonaceous residue from the fluid and returning it to the reaction zone,
- filtering ash and carbonaceous residue out of the reduced gas and feeding them to the calciner (5) and/or to the kiln (13) as a fuel,
- further comprising the gas and the fly ash escaping the cyclone (19) of the calciner (5) being passed through at least one heat exchanger (6,7) and through a filter (9).

2. A process according to claim 1, comprising preheating cement raw mix in a solids preheater (2), and feeding the gas into this solids preheater (2), in which it is cooled preferably in countercurrent by the cement raw mix and solids, these solids consisting of ash being drained off the bed of the reaction zone (1).

3. A process according to claim 1, wherein the air to the gasifier is preheated in the at least one heat exchanger (7).

4. A process according to claim 1, wherein the discharged hot bed material is ground before mixing it with the cement raw mix.

5. A process according to claim 1, wherein the discharged hot bed material is ground together with the cement raw mix.

6. A process according to claim 1, wherein the sulfur sorbent is either limestone or lime extracted from the line leading from the calciner to the kiln.

7. A process according to claim 1, wherein the molar Ca/S ratio is higher than 3.

8. A process according to claim 1, wherein the hot oxygen-containing gas fed into the reaction zone (1) is air.

9. A process according to claim 1, further comprising steam production in the clinker cooler (14) by cooling the clinker, and/or steam production in one of the at least one heat exchangers (6) by cooling the gas and the fly ash escaping the cyclone of the calciner, the produced steam being fed to a steam turbine island (16) comprising a steam turbine (59,60) being drivingly connected to a generator (55).

10. A process according to claim 1, wherein part of the flue gas discharged from clinkering process is passed through a scrubber (86), wherein gypsum CaSO4 is produced.

11. A process according to claim 2, wherein the total amount of combustible material needed for the clinkering process is controlled in function of the carbon in solids discharge (33) from filter (3) and the carbon in heated cement raw mix (29) from gas cooler (2).

12. A process according to claim 2, wherein the amount of combustion air needed for the clinkering process is controlled in function of the carbon in solids discharge (33) from filter (3) and the carbon in heated cement raw mix (29) from gas cooler (2).

13. A process according to claim 1, wherein part of the calcined pulverized lime-rich solids escaped from cyclone (19) and separated in filter (9) is re-injected into the line upstream the filter (9) to improve sulfur removal efficiency by simultaneously controlling the relative humidity in the flue gas.

14. A process according to claim 2, wherein any materials in the cement raw mix which can release gaseous sulfur species at gas cooler (2) temperatures are introduced directly into the gasifier 1 to allow capture of the released sulfur species by CaO into CaS.

EP 1 092 691 A1

9

European Patent Office

**EUROPEAN SEARCH REPORT**

Application Number

EP 99 81 0827

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 601 657 A (HENIN JEAN-PIERRE ET AL) 22 July 1986 (1986-07-22) * column 3, line 20 - column 5, line 47; figures 2,3 * | 1-14 | C04B7/43 |
| A | US 5 336 317 A (ESCHENBURG JOCHIM ET AL) 9 August 1994 (1994-08-09) * column 4, line 55 - column 6, line 46; figure 1 * | 1-14 | |
| A | US 4 391 612 A (CHANG TSUAN Y) 5 July 1983 (1983-07-05) * column 3, line 5 - column 4, line 26; figure 1 * | 1,2,8-14 | |

TECHNICAL FIELDS SEARCHED (Int.Cl.7)

C04B

The present search report has been drawn up for all claims

| Place of search | Date of completion of the search | Examiner |
|---|---|---|
| MUNICH | 27 March 2000 | Rauscher, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**     EP 99 81 0827

This annex lists the patent family members relating to the patent documents cited in the above–mentioned European search report.
The members are as contained in the European Patent Office EDP file on
The European Patent Office is in no way liable for these particulars which are merely given for the purpose of information.

27–03–2000

| Patent document cited in search report | | Publication date | Patent family member(s) | | Publication date |
|---|---|---|---|---|---|
| US 4601657 | A | 22–07–1986 | FR | 2554107 A | 03–05–1985 |
| | | | BR | 8405322 A | 03–09–1985 |
| | | | DK | 512784 A | 29–04–1985 |
| | | | EP | 0140771 A | 08–05–1985 |
| | | | IN | 162563 A | 11–06–1988 |
| | | | JP | 60187330 A | 24–09–1985 |
| | | | OA | 7852 A | 20–11–1986 |
| | | | US | 4645452 A | 24–02–1987 |
| US 5336317 | A | 09–08–1994 | DE | 4208977 C | 15–07–1993 |
| | | | AT | 179687 T | 15–05–1999 |
| | | | CA | 2091548 A | 21–09–1993 |
| | | | CN | 1078962 A | 01–12–1993 |
| | | | DE | 59309553 D | 10–06–1999 |
| | | | EP | 0561436 A | 22–09–1993 |
| | | | ES | 2130211 T | 01–07–1999 |
| | | | JP | 6048791 A | 22–02–1994 |
| | | | MX | 9301488 A | 28–02–1994 |
| US 4391612 | A | 05–07–1983 | AU | 547730 B | 31–10–1985 |
| | | | AU | 8410782 A | 02–12–1982 |
| | | | DE | 3220229 A | 23–12–1982 |
| | | | ZA | 8203795 A | 25–01–1984 |